# EUROPÄISCHE PATENTANMELDUNG

(11) **EP 2 180 592 A2**
(43) Veröffentlichungstag der Anmeldung: **28.04.2010**
(21) Anmeldenummer: 09172780.0
(22) Anmeldetag: 12.10.2009
(51) Int. Cl.: H02P 6/00

(54) **Steuervorrichtung für einen elektronisch kommutierten Elektromotor, Elektromotor und Verfahren**

(30) Priorität: 23.10.2008 DE 102008043114
(71) Anmelder: Robert Bosch GmbH, 70442 Stuttgart (DE)
(72) Erfinder: Fricker, David, 67240 Oberhoffen Sur Moder (FR)

(57) **Zusammenfassung**

Die Erfindung betrifft eine Steuervorrichtung für einen elektronisch kommutierten Elektromotor mit einer Steuereinheit und wenigstens eine Leistungsendstufe. Die Leistungsendstufe ist ausgangsseitig mit einem Steuerausgang zum Verbinden mit wenigstens einer Erregerspule eines Stators des Elektromotors verbunden und ist ausgebildet, in Abhängigkeit von einem Steuersignal einen Laststrom zu erzeugen und den Laststrom ausgangsseitig auszugeben. Die Steuervorrichtung weist einen Stromsensor auf, welcher ausgebildet ist, den Laststrom wenigstens zeitabschnittsweise zu erfassen. Die Steuereinheit ist ausgebildet, in Abhängigkeit des erfassten Laststromes das Steuersignal derart zu erzeugen, dass mittels der Erregerspule des Stators ein magnetisches Drehfeld erzeugt werden kann. Erfindungsgemäß ist der Stromsensor ausgebildet, einen Abschnitt eines zeitlichen Stromverlaufes wenigstens eines Erregerspulenstromes zu erfassen und den zeitlichen Stromverlauf des erfassten Abschnittes über den erfassten Abschnitt hinaus zu extrapolieren und als Ergebnis des Extrapolierens einen zeitlich ergänzten Stromverlauf zu erzeugen und diesen an die Steuereinheit zum Ansteuern der Leistungsendstufe auszugeben.

## Beschreibung

### Stand der Technik

Die Erfindung betrifft eine Steuervorrichtung für einen elektronisch kommutierten Elektromotor. Der Elektromotor weist eine Steuereinheit und wenigstens eine Leistungsendstufe auf. Die Leistungsendstufe ist eingangsseitig mit der Steuereinheit und ausgangsseitig mit einem Steuerausgang zum Verbinden mit wenigstens einer Erregerspule eines Stators des Elektromotors verbunden. Die Leistungsendstufe ist ausgebildet, in Abhängigkeit von einem Steuersignal einen Laststrom zu erzeugen und den Laststrom ausgangsseitig auszugeben. Die Steuervorrichtung weist einen Stromsensor auf. Der Stromsensor ist ausgebildet, den Laststrom wenigstens zeitabschnittsweise zu erfassen. Die Steuereinheit ist ausgebildet, in Abhängigkeit des erfassten Laststromes das Steuersignal derart zu erzeugen, dass mittels der Erregerspule des Stators ein magnetisches Drehfeld erzeugt werden kann.

Aus der DE 10 2006 020 676 A1 ist ein Verfahren und ein elektronisch kommutierter Elektromotor bekannt, bei dem ein temperaturabhängiger Motorparameter während eines Betriebs des Elektromotors sensorlos bestimmt wird.

### Offenbarung der Erfindung

Erfindungsgemäß ist der Stromsensor ausgebildet, einen Abschnitt eines zeitlichen Stromverlaufes wenigstens eines Erregerspulenstromes, insbesondere eines Summenstromes gebildet aus wenigstens zwei Erregerspulenströmen, zu erfassen und den zeitlichen Stromverlauf des erfassten Abschnittes, bevorzugt zum Ermitteln des wenigstens einen Erregerspulenstromes, über den erfassten Abschnitt hinaus zu extrapolieren und als Ergebnis des Extrapolierens einen zeitlich ergänzten Stromverlauf zu erzeugen und diesen an die Steuereinheit zum Ansteuern der Leistungsendstufe auszugeben.

Durch den Stromsensor kann vorteilhaft ein zeitlicher Stromverlauf in den Erregerspule, welcher insbesondere durch eine Gegeninduktion beeinflusst worden ist, mittels der Extrapolation durch den Stromsensor derart korrigiert werden, dass der Stromverlauf im extrapolierten Bereich der Impedanz der Erregerspule im erfassten Abschnitt entspricht. Ein elektronisch kommutierter Elektromotor kann so vorteilhaft nur einen Messwiderstand aufweisen, mittels dem ein Summenstrom der Erregerspulen des Stators und über den Summenstrom ein Bestromungszustand insbesondere aller Erregerspulen des Stators durch den Stromsensor ermittelt werden kann. Der Stromsensor der vorbezeichneten Art bewirkt weiter vorteilhaft, dass der Erregerspulenstrom so zu beliebigen Zeitpunkten ermittelt werden kann, an welchen zum Erzeugen eines Drehmomentes mittels der Steuereinheit und der Leistungsendstufe ein Laststrom erzeugt werden soll. Der Laststrom zum Erzeugen eines - insbesondere zukünftigen - Drehmomentes kann somit mittels der Steuereinheit in Abhängigkeit des mittels Extrapolation ermittelten Stromwertes zu einem bestimmten Zeitpunkt erzeugt werden.

Bevorzugt weist die Leistungsendstufe wenigstens eine Transistorhalbbrücke auf, wobei die Transistorhalbbrücke zwei Leistungstransistoren umfasst. Der Stromsensor weist bevorzugt einen in einem Lastkreis der Transistorhalbbrücke angeordneten Messwiderstand auf und ist ausgebildet, den Erregerspulenstrom mittels einer über dem Messwiderstand abfallenden Spannung zu erfassen. Die Leistungsendstufe weist beispielsweise für jede Erregerspule eine H-Brücke auf. Im Falle einer H-Brücke ist eine Erregerspule mit einem Anschluss mit einem Ausgang einer Transistorhalbbrücke und mit einem anderen Anschluss mit einem Ausgang einer zweiten Transistorhalbbrücke verbunden.

In einer anderen Ausführungsform weist die Leistungsendstufe eine B6-Brücke auf. Im Falle einer B6-Brücke ist ein Ausgang einer Transistorhalbbrücke mit einem Anschluss einer Erregerspule verbunden, ein zweiter Anschluss der Erregerspule ist - je nach Schaltung der Erregerspulen - im Falle einer Sternschaltung mit den zweiten Anschlüssen der anderen Erregerspulen verbunden, im Falle einer Dreieckschaltung mit einem ersten Anschluss einer anderen Erregerspule verbunden.

Die Transistoren können beispielsweise jeweils als MOS-FET (MOS-FET = Metal-Oxide-Semiconductor-Field-Effect-Transistor), als MIS-FET (MIS = Metal-Insulator-Semiconductor), als bipolarer Transistor, als JFET (JFET = Junction-FET), als IGBT (IGBT = Insulated-Gate-Bipolar-Transistor), als HEMT ( HEMT = High-Electron-Mobility-Transistor), oder als HBT ( HBT = Heterojunction-Bipolar-Transistor) ausgebildet sein.

In einer bevorzugten Ausführungsform ist der Stromsensor ausgebildet, den Zeitabschnitt des zeitlichen Stromverlaufes wenigstens eines Erregerspulenstromes mittels Abtastung zu erfassen. Der Stromsensor ist weiter bevorzugt ausgebildet, zeitlich zueinander beabstandete, jeweils einen Stromwert zu einem Erfassungszeitpunkt repräsentierende Abtastwerte zu erzeugen.

Bevorzugt ist der Stromsensor ausgebildet, den zeitlich ergänzten Stromverlauf mittels einer Approximationsfunktion, insbesondere mittels eines Polynomes, mittels einer Spline-Funktion, mittels einer Fourierreihe oder mittels wenigstens einer Exponentialfunktion zu erzeugen. Das Polynom kann beispielsweise ein Polynom ersten Grades, ein Polynom zweiten Grades oder ein Polynom dritten Grades sein. Das Polynom kann beispielsweise auch durch ein Chebyshev-Polynom gebildet sein.

Bevorzugt ist der Stromsensor ausgebildet, im Falle eines mittels Abtastung erfassten Erregerspulenstromes den Stromverlauf zwischen den Abtastwerten durch Interpolation zu erzeugen und so vorteilhaft zu ergänzen. Weiter bevorzugt können die Abtastwerte Stützstellen zum Bilden der Approximationsfunktion, beispielsweise des Polynomes, der Spline-Funktion, der Fourierreihe oder der wenigstens einen Exponentialfunktion bilden. Der Stromsensor kann so vorteilhaft mittels der Approximationsfunktion den Stromverlauf zwischen den Abtastwerten, oder zusätzlich zeitlich vor und/oder nach den Abtastwerten ergänzen.

Die Erfindung betrifft auch einen elektronisch kommutierten Elektromotor. Der Elektromotor weist einen Stator auf, wobei der Stator wenigstens zwei Erregerspulen und einen permanentmagnetisch ausgebildeten Rotor aufweist. Der Elektromotor weist auch eine Steuervorrichtung der vorbezeichneten Art auf, wobei der Steuerausgang der Steuervorrichtung mit den Erregerspule verbunden ist und der permanentmagnetische Rotor mittels des magnetischen Drehfeldes bewegt werden kann.

Die Erfindung betrifft auch ein Verfahren zum Steuern eines elektronisch kommutierten Elektromotors mit einem Stator. Bei dem Verfahren wird durch Bestromen von Erregerspulen des Stators ein magnetisches Drehfeld erzeugt. Weiter wird ein Zeitabschnitt eines zeitlichen Stromverlaufes wenigstens eines Erregerspulenstromes einer Erregerspule des Stators erfasst und ein zeitlicher Verlauf des Zeitabschnittes des wenigstens eines Erregerspulenstromes über den erfassten Zeitabschnitt hinaus extrapoliert. Als Ergebnis des Extrapolierens wird ein zeitlich ergänzter Stromverlauf erzeugt. Bevorzugt erfolgt ein weiteres Bestromen der Erregerspulen des Stators wenigstens in Abhängigkeit des zeitlich ergänzten Stromverlaufes.

In einer bevorzugten Variante des Verfahrens wird der Zeitabschnitt des zeitlichen Stromverlaufes des wenigstens einen Erregerspulenstromes der Erregerspule des Stators insbesondere diskret mittels Abtastung erfasst. Weiter bevorzugt werden mittels der Abtastung zeitlich zueinander beabstandete, jeweils einen Stromwert zu einem Erfassungszeitpunkt repräsentierende Abtastwerte erzeugt und der Stromverlauf zwischen den Abtastwerten durch Interpolation erzeugt. Dadurch wird der Stromverlauf zwischen den Abtastwerten vorteilhaft ergänzt.

Weiter bevorzugt wird der zeitlich ergänzte Stromverlauf mittels einer Approximationsfunktion, insbesondere eines Polynomes, einer Spline-Funktion, einer Fourierreihe oder mittels wenigstens einer Exponentialfunktion oder einer Kombination aus diesen erzeugt.

Der Elektromotor kann beispielsweise ein Elektromotor einer Servolenkung in einem Kraftfahrzeug sein. Weitere vorteilhafte Anwendungen mit dem Elektromotor sind ein Fensterheber eines Kraftfahrzeugs, eine Stellvorrichtung zum elektrischen Stellen eines Spiegels, oder eine andere vorteilhafte Vorrichtung mit einem elektronisch kommutierten Elektromotor.

Die Steuervorrichtung, insbesondere der Stromsensor und/oder die Steuereinheit, kann beispielsweise durch einen digitalen Signalprozessor, einen Mikroprozessor, einen Mikrokontroller, ein FPGA (FPGA = Field-Programmable-Gate-Array), oder ein ASIC (Anwendungs-Spezifische-Integrierte-Schaltung verwirklicht sein.

Die Erfindung wird nun im Folgenden anhand von Figuren und weiteren Ausführungsbeispielen beschrieben.

Figur 1 zeigt ein Ausführungsbeispiel für einen elektronisch kommutierten Elektromotor mit einem Stromsensor;

Figur 2 zeigt ein Diagramm mit zeitlichen Stromverläufen von Strömen in dem in Figur 1 dargestellten Elektromotor und der Arbeitsweise des in Figur 1 dargestellten Stromsensors;

Figur 3 zeigt ein Ausführungsbeispiel für ein Verfahren zum Betreiben eines elektronisch kommutierten Elektromotors mittels eines Stromsensors.

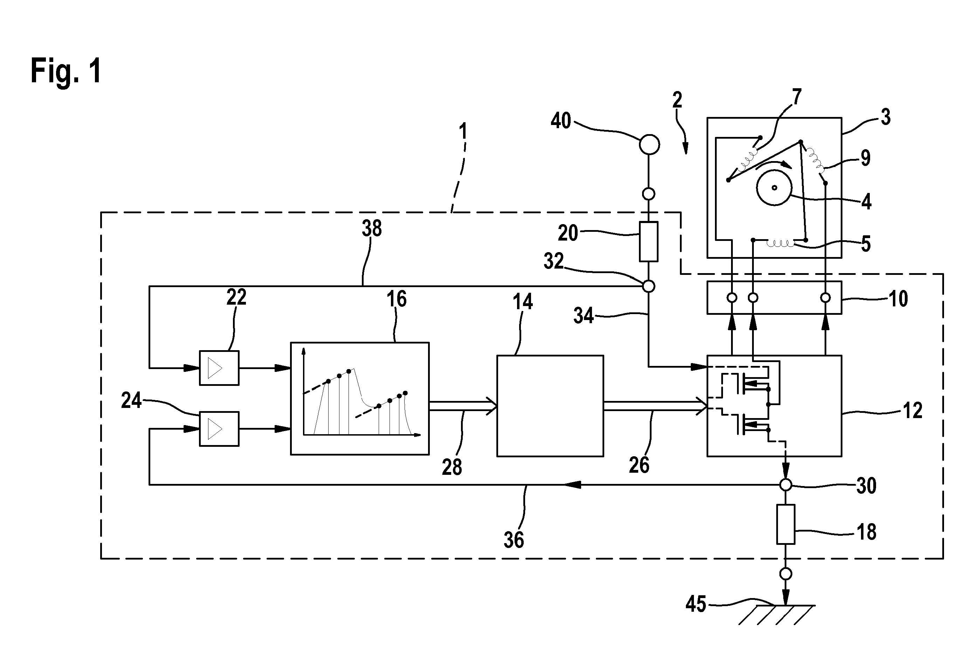

Figur 1 zeigt schematisch ein Ausführungsbeispiel für einen elektronisch kommutierten Elektromotor 2. Der Elektromotor 2 weist eine Steuervorrichtung 1 und einen Stator 3 auf. Der Stator 3 weist einen Rotor 4 auf, wobei der Rotor 4 permanentmagnetisch ausgebildet ist. Der Rotor 4 weist auch drei Erregerspulen, nämlich eine Erregerspule 5, eine Erregerspule 7 und eine Erregerspule 9 auf. Die Erregerspulen 5, 7 und 9 sind jeweils ausgebildet, im bestromten Zustand ein Magnetfeld zum Drehen des Rotors 4 zu erzeugen.

Die Steuervorrichtung 1 weist einen Steuerausgang 10 und eine mit dem Steuerausgang 10 ausgangsseitig verbundenen Leistungsendstufe 12 auf. Die Leistungsendstufe 12 weist in diesem Ausführungsbeispiel eine B6-Brücke auf. Den Erregerspulen 5, 7, und 9 ist jeweils eine Transistorhalbbrücke zugeordnet. Eine ausgangsseitig mit der Erregerspule 5 verbundene Transistorhalbbrücke ist als Bestandteil der Leistungsendstufe beispielhaft dargestellt. Die Leistungsendstufe 12 kann - anders als in diesem Ausführungsbeispiel - auch eine 3H-Brücke aufweisen.

Die Leistungsendstufe 12 ist eingangsseitig über eine Verbindung 26 mit einer Steuereinheit 14 verbunden. Die Steuereinheit 14 ist ausgebildet, in Abhängigkeit von einem eingangsseitig empfangenen, einen Zwischenkreisstrom - in diesem Ausführungsbeispiel den von der Leistungsendstufe 12 aufgenommenen Strom - repräsentierendes Stromsignal, ein Steuersignal zu erzeugen, und das Steuersignal ausgangsseitig über die Verbindung 26 an die Leistungsendstufe 12 zu senden. Die Steuereinheit 14 ist ausgebildet, das Steuersignal in Abhängigkeit des eingangsseitig empfangenen, einen zeitlichen Stromverlauf repräsentierenden Stromsignals derart zu erzeugen, dass mittels der Leistungsendstufe 12 die Erregerspulen 5, 7 und 9 des Stators 3 derart bestromt werden, dass ein magnetisches Drehfeld zum Drehen des Rotors 4 erzeugt werden kann.

Die Steuervorrichtung 1 weist auch einen Stromsensor 16 auf. Der Stromsensor 16 ist eingangsseitig über einen Verstärker 22 und eine Verbindungsleitung 38 mit einem Verbindungsknoten 32 verbunden. Die Leistungsendstufe 12 ist über eine Verbindungsleitung 34 mit dem Verbindungsknoten 32 verbunden. Der Verbindungsknoten 32 ist über einen Messwiderstand 20 mit einem Anschluss 40 für eine Versorgungsspannung verbunden. Die Leistungsendstufe 12 kann somit die vom Anschluss 40 abgegebene Versorgungsspannung über den Messwiderstand 20, den Verbindungsknoten 32 und die Verbindungsleitung 34 empfangen. Die Leistungsendstufe 12 ist auch über einen Verbindungsknoten 30 und über einen Messwiderstand 18 mit einem Masseanschluss 45 verbunden. Der Verbindungsknoten 30 ist über eine Verbindungsleitung 36 und über einen Verstärker 24 mit einem Eingang für eine über dem Messwiderstand 18 abfallende Spannung des Stromsensors 16 verbunden. Dazu ist beispielsweise der Verstärker 24 mit dem Masseanschluss 45 verbunden. Die wenigstens eine Transistorhalbbrücke der Leistungsendstufe 12 wird somit zum Erzeugen eines Laststromes zum Versorgen der Erregerspulen 5, 7 und 9 über den Anschluss 40 und den Masseanschluss 45 mit Strom versorgt. Der Verbindungsknoten 32 greift eine über dem Messwiderstand 20 abfallende Spannung ab. Die über dem Messwiderstand 20 abfallende Spannung repräsentiert den über den Messwiderstand 20 fließenden Strom, der von den mittels der Transistorhalbbrücken der Leistungsendstufe 12 geschalteten Erregerspulen verbraucht wird. Der Verstärker 22 ist dazu beispielsweise mit dem Anschluss 40 verbunden und kann so die über dem Messwiderstand abfallende Spannung erfassen.

Der Verbindungsknoten 30 greift eine über dem Messwiderstand 18 abfallende Spannung ab, wobei die über dem Messwiderstand 18 abfallende Spannung einen Stromverlauf eines Stromes repräsentiert, der über die geschalteten Erregerspulen, die Transistorhalbbrücken der Leistungsendstufe 12, über den Verbindungsknoten 30 und den Messwiderstand 18 zum Masseanschluss 45 fließt.

Die Messwiderstände 20 und 18 der Steuervorrichtung 1 sind beispielhaft dargestellt. Die Steuervorrichtung 1 kann - anders als in diesem Ausführungsbeispiel dargestellt - nur einen Messwiderstand, nämlich den Messwiderstand 18 oder den Messwiderstand 20 aufweisen. Der Stromsensor 16 ist dann entweder eingangsseitig mit dem Verbindungsknoten 30 und dem Messwiderstand 18 verbunden, oder eingangseitig mit dem Verbindungsknoten 32 und dem Messwiderstand 20 verbunden.

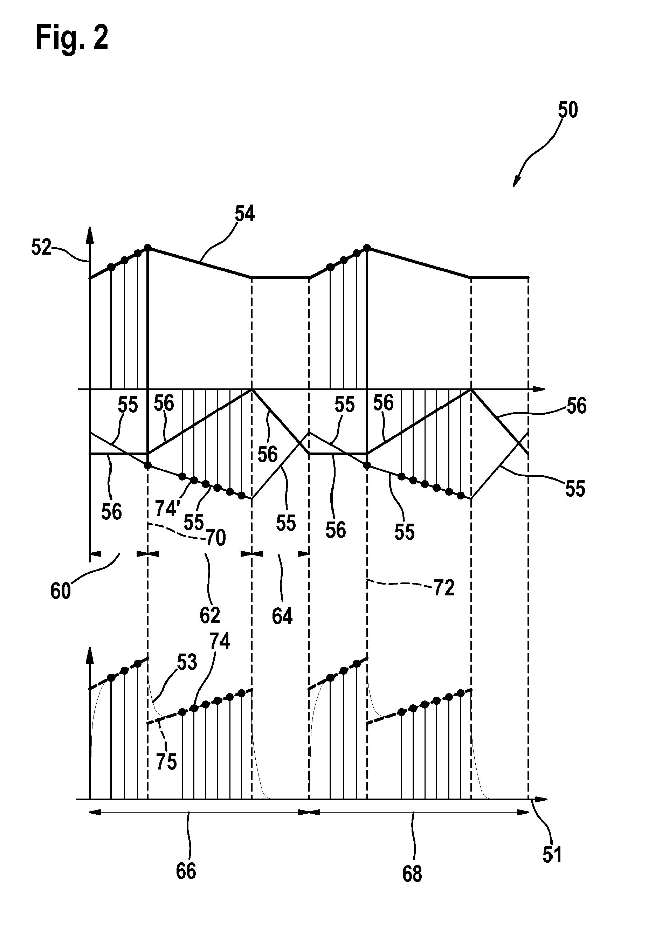

Die Funktionsweise des Stromsensors 16 wird nun im Folgenden anhand eines Diagramms in Figur 2 erläutert.

Figur 2 zeigt ein Diagramm 50. Das Diagramm 50 zeigt - schematisch - ein Ausführungsbeispiel für Stromverläufe von Strömen, welche während eines Betriebs des in Figur 1 dargestellten Elektromotors 2 durch die Erregerspulen 5, 7 und 9 fließen. Das Diagramm 50 weist eine Abszisse 51, welche eine Zeitachse repräsentiert und eine Ordinate 52 auf, welche eine Amplitudenachse repräsentiert. Dargestellt ist ein zeitlicher Stromverlauf 54, wobei der zeitliche Stromverlauf 54 einem Strom entspricht, der während eines Betriebs des Elektromotors 2 durch die Erregerspule 5 fließt. Dargestellt ist auch ein Stromverlauf 55, welcher einem Strom durch die Erregerspule 7 während eines Betriebs des Elektromotors 2 entspricht, und ein Stromverlauf 56, welcher einem Strom durch die Erregerspule 9 während eines Betriebs des Elektromotors 2 entspricht.

Dargestellt ist auch ein Stromverlauf 53, welcher einem Summenstrom entspricht, welcher beispielsweise durch den Messwiderstand 20 erfasst worden ist. Der durch den Stromverlauf 53 dargestellte Summenstrom weist einen Zeitabschnitt 66 und einen Zeitabschnitt 68 auf, wobei die Zeitabschnitte 66 und 68 jeweils eine Periode einer Puls-Ansteuerung, insbesondere Ansteuerung mittels Pulsweitenmodulation der Leistungsendstufe 12 durch die Steuereinheit 14 repräsentieren. Dargestellt sind auch Zeitabschnitte 60, 62 und 64.

Die Erregerspulen 5, 7, und 9 des Rotors 3 sind zusammen in Sternschaltung geschaltet und sind während der Zeitabschnitte 60, 62 und 64 durch die Steuereinheit wie folgt beschaltet:
Während des Zeitabschnitts 60 ist die Erregerspule 5 auf das Potential 40 der Versorgungsspannung geschaltet, die Erregerspulen 7 und 9 sind jeweils auf den Masseanschluss 45 geschaltet.
Während des Zeitabschnitts 62 sind die Erregerspulen 5 und 9 jeweils auf das Potential 40 der Versorgungsspannung geschaltet, die Erregerspule 7 ist auf den Masseanschluss 45 geschaltet.
Während des Zeitabschnitts 64 sind alle drei Erregerspulen 5, 7 und 9 jeweils auf das Potential 40 der Versorgungsspannung geschaltet.
Die folgende Matrix gibt die dem Diagramm 50 zugrundeliegende Beschaltung und so das Potential der Erregerspulen des Stators 3 mittels entsprechender Bezugszeichen wieder:

| | | | | |
|---|---|---|---|---|
| Erregerspule | | 5 | 7 | 9 |
| Zeitintervall/ | 60 | 40 | 45 | 45 |
| Potenzial | 62 | 40 | 45 | 40 |
| | 64 | 40 | 40 | 40 |

Der Stromverlauf 53 repräsentiert in diesem Ausführungsbeispiel einen Summenstrom, gebildet aus den einzelnen Stromverläufen 54, 55 und 56. Der Stromsensor 16 kann so in Abhängigkeit von dem Summenstrom einen Gesamt-Bestromungszustand des Rotors 4 erfassen.

Das Diagramm 50 zeigt auch Abtastwerte, erzeugt durch eine Abtastung des Summenstroms, repräsentiert durch den Stromverlauf 53, durch den Stromsensor 16. Ein Abtastwert 74 ist beispielhaft bezeichnet. Beispielhaft ist auch ein Abtastwert 74' bezeichnet, welcher dem Abtastwert 74 entspricht und einen Stromwert des Stromverlaufes 55 repräsentiert.

Während des Zeitabschnitts 60 repräsentiert der Stromverlauf 53 den Stromverlauf 54 der Erregerspule 5, da die Erregerspulen 7 und 9 jeweils auf Masse geschaltet sind. Die Leistungsendstufe versorgt so eine Serienschaltung von zwei Impedanzen, gebildet aus der Erregerspule 5 und einer Parallelschaltung der Erregerspulen 7 und 9. Während des Zeitabschnitts 62 repräsentiert der Summenstrom 53 den Strom 55, welcher - mit negativen Vorzeichen behaftet - wiederkehrt, da die Erregerspule 7 nun auf das Potenzial des Masseanschlusses 45 und in Serie mit einer Parallelschaltung - gebildet durch die Erregerspulen 5 und 9 - auf den Anschluss 40 der Versorgungsspannung geschaltet ist. Während des Zeitabschnitts 64 repräsentiert der Summenstrom 53 keinen Strom, da alle Erregerspulen auf dasselbe Potenzial des Anschlusses 40 geschaltet sind.

Der Stromverlauf 53 steigt im Bereich eines Anfanges des Zeitabschnitts 60 - verursacht durch Gegeninduktion - bis zu einem Zeitabschnitt allmählich an, wo der Stromverlauf 53 in diesem Ausführungsbeispiel durch eine Geradenfunktion gebildet ist. Der Stromverlauf 53 fällt im Bereich des Zeitabschnitts 62 im Bereich eines Anfangs allmählich ab, und steigt dann mit einer Geradenfunktion kontinuierlich an. Die Zeitabschnitte, welche durch die Geradenfunktion gebildet sind, sind in diesem Ausführungsbeispiel mittels Abtastung durch den Stromsensor 16 abgetastet.

Der Stromsensors 16 kann dazu beispielsweise einen Analog-Digital-Wandler aufweisen. Der Analog-Digital-Wandler kann beispielsweise durch einen Delta-Sigma-Wandler gebildet sein. In dieser Ausführungsform mit einem Delta-Sigma-Wandler weist die Steuervorrichtung 1 beispielsweise keinen Verstärker 22 und keinen Verstärker 24 auf.

Der Stromsensor 16 ist ausgebildet, den mittels der Abtastwerte abgetasteten Stromverlauf, - in diesem Ausführungsbeispiel eine Gerade bildend - mittels einer Approximationsfunktion zu extrapolieren. Beispielsweise ist die Approximationsfunktion durch ein Polynom ersten Grades gebildet. Der von dem Stromsensor 16 mittels Extrapolation erzeugte zeitlich ergänzte Stromverlauf ist gestrichelt dargestellt.

Dargestellt ist auch der eingangs erwähnte bestimmte Zeitpunkt, im Folgenden Messzeitpunkt 70 genannt. Dargestellt ist auch ein Messzeitpunkt 72. Der Stromsensor 16 ist ausgebildet, mittels Extrapolierens gemäß der Approximationsfunktion den Stromverlauf des Stromes durch die Erregerspule 7 im Zeitabschnitt 62 zu extrapolieren und einen zeitlich ergänzten Stromverlauf des Stromes durch die Erregerspule 7 zu erzeugen. Mittels des zeitlich ergänzten Stromverlaufes 75 kann der Stromsensor 16 dann einen Stromwert zum Messzeitpunkt 70 des Stromes durch die Erregerspule 7 erzeugen. Der Stromsensor 16 ist ausgebildet, den so mittels Extrapolation zum Messzeitpunkt 70 erzeugten Stromwert, repräsentiert durch das Stromsignal, ausgangsseitig an die Steuereinheit 14 auszugeben. Die Steuereinheit 14 kann dann in Abhängigkeit des eingangsseitig empfangenen Stromsignals die Leistungsendstufe 12 zum Erzeugen eines Drehmomentes mittels des Rotors 4 ansteuern.

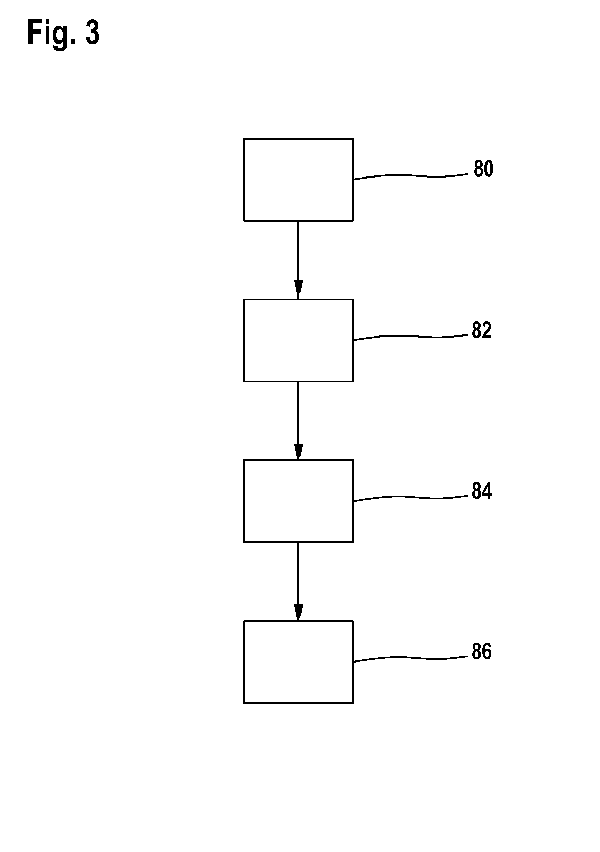

Figur 3 zeigt - schematisch - ein Ausführungsbeispiel für ein Verfahren zum Betreiben eines elektronisch kommutierten Elektromotors mittels eines Stromsensors, beispielsweise des in Figur 1 dargestellten Elektromotors 2 mit dem Stromsensor 16.

Bei dem Verfahren wird in einem Verfahrensschritt 80 durch Bestromen der Erregerspulen 5, 7, und 9 des Stators 3 ein magnetisches Drehfeld erzeugt, mit dem der Rotor 4 in eine Drehbewegung versetzt werden kann.

In einem weiteren Schritt 82 wird ein Zeitabschnitt eines zeitlichen Stromverlaufes wenigstens eines - in Figur 2 dargestellten - Erregerspulenstromes 53 erfasst und ein zeitlicher Stromverlauf des Abschnittes des wenigstens eines Erregerspulenstromes 53 über den erfassten Zeitabschnitt hinaus extrapoliert. In einem weiteren Schritt 84 wird als Ergebnis des Extrapolierens ein zeitlich ergänzter - in Figur 2 dargestellter - Stromverlauf 75 erzeugt. In einem weiteren Schritt 86 erfolgt ein weiteres Bestromen der Erregerspulen 5, 7, und 9 des Stators 3 - und so ein Erzeugen eines weiteren Drehmomentes des Elektromotors 2 - in Abhängigkeit des zeitlich ergänzten Stromverlaufes 75.

## Patentansprüche

1. Steuervorrichtung (1) zum Verbinden mit einem elektronisch kommutierten Elektromotor (2),
mit einer Steuereinheit (14) und mit wenigstens einer Leistungsendstufe (12),
wobei die Leistungsendstufe (12) eingangsseitig mit der Steuereinheit (14) und ausgangsseitig mit einem Steuerausgang (10) zum Verbinden mit wenigstens einer Erregerspule (5, 7, 9) eines Stators (3) des Elektromotors (2) verbunden ist,
wobei die Leistungsendstufe (12) ausgebildet ist, in Abhängigkeit von einem Steuersignal einen Laststrom zu erzeugen und den Laststrom ausgangsseitig auszugeben,
wobei die Steuervorrichtung (1) einen Stromsensor (16) aufweist, welcher ausgebildet ist, wenigstens einen Strom in einem Lastkreis (45, 18, 30, 12, 34, 32, 20, 40) der wenigstens einen Leistungsendstufe (12) zu erfassen und wobei die Steuereinheit (14) ausgebildet ist, in Abhängigkeit des erfassten Stromes das Steuersignal derart zu erzeugen, dass mittels der Erregerspulen (5, 7, 9) des Stators (3) ein magnetisches Drehfeld erzeugt werden kann,
**dadurch gekennzeichnet, dass** der Stromsensor (16) ausgebildet ist, einen Abschnitt eines zeitlichen Stromverlaufes (53) wenigstens eines Erregerspulenstromes (54, 55, 56), insbesondere eines aus wenigstens zwei Erregerspulenströmen gebildeten Summenstromes (53), zu erfassen und einen zeitlichen Stromverlauf des erfassten Abschnittes (74) zum Ermitteln des wenigstens einen Erregerspulenstromes (54, 55, 56) über den erfassten Abschnitt (74) hinaus zu extrapolieren und als Ergebnis des Extrapolierens einen zeitlich ergänzten Stromverlauf (75) zu erzeugen und diesen an die Steuereinheit (14) zum Ansteuern der Leistungsendstufe (12) auszugeben.

2. Steuervorrichtung (1) nach Anspruch 1, **dadurch gekennzeichnet, dass**
die Leistungsendstufe (12) wenigstens eine Transistorhalbbrücke aufweist, wobei die Transistorhalbbrücke zwei Leistungstransistoren umfasst und der Stromsensor (16) einen im Lastkreis der Transistorhalbbrücke angeordneten Messwiderstand (18, 20) aufweist, und der Stromsensor (16) ausgebildet ist, den Erregerspulenstrom (53) mittels einer über dem Messwiderstand (18, 20) abfallenden Spannung zu erfassen.

3. Steuervorrichtung nach Anspruch 1 oder 2, **dadurch gekennzeichnet, dass** der Stromsensor (16) ausgebildet ist, den zeitlich ergänzten Stromverlauf (75) mittels einer Approximationsfunktion zu erzeugen.

4. Steuervorrichtung nach einem der vorhergehenden Ansprüche, **dadurch gekennzeichnet, dass** der Stromsensor (16) ausgebildet ist, den wenigstens einen Erregerspulenstrom (53) durch Abtastung zu erfassen und zeitlich zueinander beabstandete, jeweils einen Stromwert zu einem Erfassungszeitpunkt repräsentierende Abtastwerte (74) zu erzeugen, und den Stromverlauf zwischen den Abtastwerten (74) durch Interpolation zu erzeugen.

5. Elektronisch kommutierter Elektromotor (2) mit einer Steuervorrichtung (1) nach einem der vorhergehenden Ansprüche,
und mit einem Stator (3), wobei der Stator (3) wenigstens zwei Erregerspulen (5, 7, 9) und einen permanentmagnetisch ausgebildeten Rotor (4) aufweist, wobei der Steuerausgang (10) der Steuervorrichtung (1) mit den Erregerspulen (5, 7, 9) verbunden ist und der Rotor (4) mittels des magnetischen Drehfeldes in eine Drehbewegung versetzt werden kann.

6. Verfahren zum Steuern eines elektronisch kommutierten Elektromotors (2) mit einem Stator (3), bei dem durch Bestromen von Erregerspulen (5, 7, 9) des Stators (3) ein magnetisches Drehfeld erzeugt wird,
und bei dem ein Abschnitt eines zeitlichen Stromverlaufes wenigstens eines Erregerspulenstromes (53) wenigstens einer Erregerspule (5, 7, 9) des Stators (3) erfasst wird und
der zeitliche Stromverlauf des Abschnittes des wenigstens eines Erregerspulenstromes über den erfassten Abschnitt hinaus extrapoliert wird,
und als Ergebnis des Extrapolierens ein zeitlich ergänzter Stromverlauf (75) erzeugt wird,
und ein weiteres Bestromen der Erregerspulen (5, 7, 9) des Stators (3) wenigstens in Abhängigkeit des zeitlich ergänzten Stromverlaufes (75) erfolgt.

7. Verfahren nach Anspruch 6, **dadurch gekennzeichnet, dass** der Abschnitt des zeitlichen Stromverlaufes des wenigstens einen Erregerspulenstromes (53) der Erregerspule des Stators diskret mittels Abtastung erfasst wird.

8. Verfahren nach Anspruch 7, bei dem mittels der Abtastung zeitlich zueinander beabstandete, jeweils einen Stromwert zu einem Erfassungszeitpunkt repräsentierende Abtastwerte (74) erzeugt werden, und der Stromverlauf (53) zwischen den Abtastwerten (74) durch Interpolation erzeugt wird.

9. Verfahren nach einem der vorhergehenden Ansprüche 6 bis 8, **dadurch gekennzeichnet, dass** der zeitlich ergänzten Stromverlauf (75) mittels einer Approximationsfunktion, insbesondere eines Polynomes, einer Spline-Funktion, einer Fourierreihe oder mittels wenigstens einer Exponentialfunktion erzeugt wird.
